# FASCICULE DE BREVET EUROPEEN

(11) **EP 3 494 843 B1**
(45) Date de publication et mention de la délivrance du brevet: **28.09.2022**
(21) Numéro de dépôt: 18210541.1
(22) Date de dépôt: 05.12.2018
(51) Int. Cl.: A47J 27/08

(54) **APPAREIL DE CUISSON SOUS PRESSION À TRANSPORT AMELIORÉ**
DRUCKKOCHGERÄT ZUM VERBESSERTEN TRANSPORTIEREN
PRESSURE-COOKING DEVICE WITH IMPROVED TRANSPORT

(30) Priorité: 07.12.2017 FR 1761740
(43) Date de publication de la demande: 12.06.2019
(73) Titulaire: SEB S.A., 69130 Ecully (FR)
(72) Inventeur: CHAMEROY, Eric, 21260 VERONNES (FR)
(74) Mandataire: Weber, Jean-François

(56) Documents cités:
- EP-A1- 3 245 914
- WO-A1-01/30216

## Description

La présente invention se rapporte au domaine technique général des appareils de cuisson d'aliments sous pression, notamment de nature domestique, destinés à former une enceinte de cuisson hermétique au sein de laquelle sont cuits les aliments sous pression de vapeur.

La présente invention concerne plus particulièrement un appareil de cuisson d'aliments sous pression comprenant au moins un couvercle et un levier de commande manuelle de l'ouverture/fermeture de l'appareil, ledit levier étant monté sur le couvercle à pivotement selon un axe horizontal de pivotement, entre des positions relevée et abaissée correspondant respectivement à l'ouverture et à la fermeture de l'appareil, ledit levier s'étendant longitudinalement entre d'une part une extrémité intérieure par laquelle il est relié au couvercle et d'autre part une extrémité libre.

Les appareils de cuisson sous pression, en particulier à usage domestique, du genre autocuiseur, sont bien connus. Ils comprennent généralement une cuve et un couvercle destiné à être rapporté sur la cuve pour former une enceinte de cuisson hermétiquement close au sein de laquelle sont placés les aliments à cuire. L'intérieur de l'enceinte peut ainsi atteindre des pression et température élevées lorsque l'appareil est soumis à l'influence d'une source de chauffe.

Il existe différents moyens pour réaliser un verrouillage hermétique réversible du couvercle sur la cuve. On connaît en particulier des appareils de cuisson sous pression, habituellement désignés dans le domaine technique sous l'appellation « *autocuiseurs* à *couvercle rentrant »,* mettant en œuvre un couvercle qui doit d'abord être inséré dans la cuve, sous un rebord supérieur rentrant de cette dernière, avant de venir par en-dessous en contact étanche avec ce rebord supérieur rentrant qui s'étend vers l'intérieur de la cuve et en surplombe le fond.

Il existe de surcroît différentes technologies d'autocuiseurs « à *couvercle rentrant* ». On connaît ainsi les autocuiseurs « à *trou d'homme* », qui mettent en œuvre d'une part une cuve dont le rebord supérieur rentrant délimite une ouverture ovale et d'autre part un couvercle de forme conjuguée ovale. Cette conjugaison de formes ovales permet d'introduire entièrement le couvercle à l'intérieur de la cuve, puis, une fois qu'il est positionné sous le rebord rentrant, de l'aligner avec l'ouverture de cuve pour qu'il vienne se plaquer de manière étanche contre ledit rebord rentrant. La conception de ces appareils « à *trou d'homme* » interdit bien entendu par nature l'utilisation de couvercles circulaires.

Il existe toutefois également des autocuiseurs à couvercle rentrant permettant la mise en œuvre de couvercles circulaires. Ces appareils sont généralement connus sous l'appellation « *autocuiseurs à couvercle flexible* ». Ces appareils sont basés sur l'utilisation d'un couvercle capable de passer, sous l'effet d'une sollicitation mécanique en flexion, d'une configuration géométrique de repos permettant l'introduction du couvercle dans la cuve, à une configuration géométrique déformée permettant de réaliser la fermeture hermétique de la cuve. On connaît ainsi un autocuiseur à couvercle flexible comprenant une cuve dont le rebord supérieur rentrant délimite une ouverture de cuve circulaire et un couvercle obtenu à partir d'un flan métallique circulaire roulé. Dans sa configuration de repos, le couvercle présente une forme de disque « *roulé* », c'est à dire cintré, qui lui permet d'être introduit au sein de la cuve sous le rebord rentrant. Dans sa configuration déformée le couvercle présente une forme de disque sensiblement plat, qui lui permet de venir en appui périphérique continu et uniforme contre la face interne du rebord rentrant, de façon à former une enceinte étanche. Cet appareil à couvercle flexible connu est également doté d'un levier pivotant destiné à commander le passage du couvercle de sa configuration de repos à sa configuration déformée, au moyen d'un système de transmission d'effort à chemin de came et biellette destiné à transformer l'effort appliqué sur le levier en un effort de traction sur le centre du couvercle. Cet effort de traction est destiné à amener le couvercle en appui périphérique contre et sous le rebord rentrant de la cuve, pour le déformer ensuite afin de l'amener en configuration déformée. Le levier pivotant est plus précisément monté à rotation entre une position basse de fermeture du couvercle, dans laquelle le levier s'étend horizontalement, parallèlement au couvercle fermé, et une position haute correspondant à l'ouverture du couvercle.

Afin de prévenir toute ouverture intempestive de cet appareil connu pendant le processus de cuisson sous pression, ce qui pourrait conduire à un échappement brutal du couvercle avec toutes les conséquences désastreuses qui pourraient s'ensuivre, cet appareil connu est équipé d'un dispositif de sécurité à l'ouverture conçu pour bloquer le levier en position de fermeture lorsque la valeur de la pression interne atteint ou excède un seuil de sécurité.

Cet appareil connu donne globalement satisfaction, mais n'en présente pas moins certains inconvénients.

En effet, même si la cuve de cet appareil connu est pourvue de deux poignées diamétralement opposées destinées à permettre le transport de l'appareil, l'utilisateur peut être malgré tout tenté d'utiliser plutôt le levier pivotant en position basse en guise de poignée de transport. Cette possibilité est d'autant plus attractive pour l'utilisateur qu'elle peut permettre un transport de l'appareil à une seule main, alors que l'usage des deux mains est nécessaire pour transporter l'appareil au moyen des deux poignées de cuve. Cet usage détourné du levier de commande de l'ouverture/fermeture n'est toutefois pas sans danger. En effet, le soulèvement de l'autocuiseur par le levier génère en réaction (sous l'effet du poids de l'appareil et des éventuels aliments solides et liquides qu'il contient) un effort sur le levier qui sollicite ce dernier en direction de sa position haute d'ouverture. Cela signifie qu'en soulevant ainsi l'appareil par le levier en position basse de fermeture, l'utilisateur risque de voir le levier pivoter brutalement en position d'ouverture, ce qui entraînerait la séparation du couvercle et de la cuve, puis la chute de cette dernière, avec les aliments qu'elle contient. Dans un tel cas de figure, l'utilisateur risque non seulement d'abîmer l'appareil de cuisson et le sol de son logement, mais également de se blesser, par exemple si l'appareil lui tombe sur le pied et/ou s'il est éclaboussé par des aliments brûlants. Le risque est potentiellement encore plus grand si l'utilisateur soulève l'appareil par le levier de commande alors que l'appareil est sous pression (c'est-à-dire que la pression interne excède le seuil de sécurité permettant l'ouverture du couvercle). Dans ce cas le levier va en effet, en réaction au poids de l'appareil et de son contenu, forcer sur le dispositif de sécurité à l'ouverture, avec le risque de casser ce dernier, ce qui entraînerait alors le déverrouillage du couvercle et donc des conséquences potentiellement catastrophiques puisque l'appareil est sous pression.

Dans le cas où l'appareil est équipé d'un système de débrayage permettant au levier de gagner sa position haute même lorsque l'appareil est sous pression, le risque d'ouverture intempestif du couvercle est alors minimisé, mais le passage brutal du levier pivotant de sa position basse à sa position haute, sous l'effet du soulèvement de l'appareil par le levier, peut néanmoins surprendre l'utilisateur et conduire ce dernier à laisser échapper l'appareil.

On connaît par ailleurs du document EP-3 245 914 A1 un autocuiseur à couvercle rentrant comprenant un verrou mobile et un levier de commande.

Les objets assignés à la présente invention visent en conséquence à remédier aux différents inconvénients énumérés précédemment et à proposer un nouvel appareil de cuisson sous pression qui, tout en présentant un niveau de sécurité d'utilisation élevé, est particulièrement pratique à utiliser.

Un autre objet de l'invention vise à proposer un nouvel appareil de cuisson sous pression particulièrement robuste.

Un autre objet de l'invention vise à proposer un nouvel appareil de cuisson sous pression d'utilisation particulièrement intuitive.

Un autre objet de l'invention vise à proposer un nouvel appareil de cuisson d'aliments sous pression de conception particulièrement ergonomique.

Un autre objet de l'invention vise à proposer un nouvel appareil de cuisson d'aliments sous pression dont la conception permet d'éviter que des efforts mécaniques potentiellement importants puissent s'exercer intempestivement sur des pièces de sécurité l'appareil.

Un autre objet de l'invention vise à proposer un nouvel appareil de cuisson d'aliments sous pression de construction extrêmement compacte et légère.

Un autre objet de l'invention vise à proposer un nouvel appareil de cuisson sous pression de construction particulièrement simple et bon marché.

Un autre objet de l'invention vise à proposer un nouvel appareil de cuisson sous pression dont la conception est particulièrement adaptée à la mise en œuvre d'un couvercle flexible.

Les objets assignés à l'invention sont atteints à l'aide d'un appareil de cuisson d'aliments sous pression comprenant au moins un couvercle et un levier de commande manuelle de l'ouverture/fermeture de l'appareil, ledit levier étant monté sur le couvercle à pivotement selon un axe horizontal de pivotement, entre des positions relevée et abaissée correspondant respectivement à l'ouverture et à la fermeture de l'appareil, ledit levier s'étendant longitudinalement entre d'une part une extrémité intérieure par laquelle il est relié au couvercle et d'autre part une extrémité libre, ledit appareil étant caractérisé en ce qu'il comprend une prise manuelle de transport du couvercle montée sur ce dernier, ledit levier étant mobile relativement à ladite prise manuelle de transport, laquelle se présente sous la forme d'une pièce allongée, contre et sur laquelle vient se rabattre ledit levier en position abaissée, ladite pièce allongée s'étendant sous le levier en position abaissée le long seulement d'une première portion de ce dernier, ladite première portion étant prolongée par une deuxième portion du levier qui s'étend librement jusqu'à ladite extrémité libre et n'est pas superposée à ladite pièce allongée, pour permettre ainsi la préhension manuelle de la seule deuxième portion du levier en position abaissée.

D'autres objets et avantages particuliers de l'invention apparaîtront plus en détails à la lecture de la description qui suit, ainsi qu'à l'aide des dessins annexés, fournis à titre purement illustratif et non limitatif, parmi lesquels :
- La figure 1 illustre, selon une vue en perspective, un appareil de cuisson à couvercle flexible conforme à l'invention, ledit appareil se trouvant dans une configuration de fermeture, selon laquelle le levier de commande manuelle occupe sa position abaissée, tandis que le couvercle sa position de fermeture.
- La figure 2 illustre, selon une vue schématique en perspective de dessus, un détail de réalisation de l'appareil de la figure 1, correspondant à un ensemble de couvercle incorporant le couvercle ainsi qu'un module d'accostage embarquant notamment le levier de commande manuelle, lequel occupe sa position abaissée.
- La figure 3 illustre, selon une vue schématique en perspective de dessous, l'ensemble de couvercle de la figure 2.
- La figure 4 illustre, selon une vue schématique en coupe, l'appareil de la figure 1 en configuration de fermeture.
- La figure 5 illustre, selon une vue schématique en perspective, l'appareil de la figure 1 qui se trouve cette fois dans une configuration d'ouverture complète, selon laquelle le levier de commande manuelle occupe sa position relevée, tandis que le couvercle occupe sa position d'ouverture (le couvercle est ici représenté de façon purement schématique et adopte en réalité un profil dont le cintrage est beaucoup plus marqué).
- La figure 6 illustre, selon une vue schématique en perspective, l'ensemble de couvercle des figures 2 et 3 avec le levier en position relevée.
- La figure 7 illustre, selon une schématique en coupe, l'appareil de la figure 5.
- La figure 8 illustre, selon une vue schématique en perspective, l'appareil des figures précédentes qui se trouve cette fois dans une configuration intermédiaire entre la configuration de fermeture de la figure 1 et la configuration d'ouverture complète de la figure 5, configuration intermédiaire selon laquelle le levier occupe une position angulaire intermédiaire entre sa position abaissée et sa position relevée des figures 1 et 5, tandis que le couvercle se trouve en dehors de sa position de fermeture, mais n'a pas (encore) atteint la position d'ouverture complète des figures 5 à 7.

L'appareil de cuisson sous pression 1 conforme à l'invention est destiné à assurer la cuisson d'aliments, sous pression de vapeur. De façon préférentielle, l'appareil de cuisson sous pression 1 est constitué par un appareil domestique de cuisson sous pression, conçu pour une utilisation dans un contexte familial. Comme illustré aux figures, l'appareil 1 comprend classiquement d'une part une cuve 2 qui forme un récipient de cuisson destiné à accueillir les aliments, et d'autre part un couvercle 3 destiné à fermer la cuve 2 pour former ainsi avec ladite cuve 2 une enceinte de cuisson capable de monter en pression. La cuve 2 présente par exemple, comme illustré aux figures, une symétrie de révolution selon un axe X-X'. Dans ce qui suit, l'adjectif *« axial* » se réfère à la direction de cet axe de symétrie X-X', direction qui s'apparente à la direction verticale lorsque l'appareil 1 est en fonctionnement normal.

Bien évidemment, la cuve 2 peut tout à fait ne pas affecter une forme de révolution (et être par exemple de forme ovale), sans pour autant que l'on sorte du cadre de l'invention. La cuve 2 est avantageusement fabriquée à partir d'un matériau métallique (par exemple acier inoxydable ou alliage d'aluminium), et comprend un fond 2A ainsi qu'une paroi latérale 2B qui s'élève à partir et à la périphérie du fond 2A. La cuve 2 comprend avantageusement un rebord rentrant 2C qui s'étend de façon centripète à partir de la paroi latérale 2B, préférentiellement à partir du sommet de cette dernière. De préférence, tel que cela est illustré aux figures, la paroi latérale 2B s'étend entre une extrémité inférieure reliée à la périphérie du fond 2A et une extrémité supérieure prolongée par le rebord rentrant 2C, lequel converge radialement vers le centre de la cuve 2, c'est à dire en direction de l'axe X-X'. Le rebord rentrant 2C présente une face interne située en regard de l'intérieur de la cuve 2, c'est à dire orientée vers le fond 2A. De préférence, le rebord rentrant 2C comprend un tronçon sensiblement tronconique 21C qui s'étend, par exemple selon une direction oblique vers le haut, dans le prolongement de la paroi latérale 2B, vers l'intérieur de la cuve 2, en surplomb de l'intérieur de la cuve 2 et de son fond 2A. Le tronçon tronconique 21C se termine lui-même avantageusement par un bord roulé 22C qui ménage un logement destiné à accueillir un joint d'étanchéité annulaire 4, lequel vient habiller la face interne du rebord rentrant 2C. Le rebord rentrant centripète 2C, qui fait donc saillie vers l'intérieur de la cuve 2, délimite ainsi une ouverture d'accès à l'intérieur de la cuve 2, par laquelle peuvent être introduits les aliments à cuire. Le diamètre de cette ouverture définie par le rebord rentrant 2C est sensiblement inférieur au diamètre de la paroi latérale 2B. La cuve 2 comprend par ailleurs avantageusement une paire de poignée de transport 200, 201 attachées à sa paroi latérale 2B, par exemple de façon diamétralement opposée. Ces poignées de transport 200, 201 sont destiné à permettre la manipulation à deux mains de la cuve 2 ou du sous-ensemble cuve 2 / couvercle 3.

De préférence, l'appareil de cuisson 1 constitue un appareil de cuisson sous pression à couvercle rentrant. Cela signifie que pour former, à l'aide de la cuve 2 et du couvercle 3, une enceinte étanche de cuisson, il est nécessaire d'introduire tout d'abord entièrement le couvercle 3 à l'intérieur de la cuve 2, sous le bord libre supérieur (formé par le rebord rentrant 2C) de cette dernière, ledit bord libre délimitant l'ouverture d'accès à l'intérieur de la cuve 2, puis d'imprimer audit couvercle 3 un mouvement vertical de bas en haut pour que le couvercle 3 vienne en appui étanche contre et sous ledit bord libre supérieur (i.e. contre la face inférieure du bord rentrant 2C), pour obtenir une enceinte de cuisson hermétiquement close. Ce principe général sous-tendant la construction et le fonctionnement des appareils de cuisson sous pression à couvercle rentrant est bien connu en tant que tel.

Afin de maîtriser la pression de cuisson, l'appareil 1 comprend avantageusement un moyen de régulation de pression, comme par exemple une soupape de régulation 7. Ladite soupape de régulation de pression 7 est montée de préférence sur le couvercle 3, de façon par exemple à être portée directement par ledit couvercle 3 et agencée pour maintenir la pression régnant dans l'enceinte de cuisson à une valeur prédéterminée sensiblement constante, dite pression de fonctionnement, laquelle excède la pression atmosphérique d'une valeur qui est comprise par exemple entre sensiblement 10 et 120 kPa, ou par exemple entre 50 et 55 kPa, ou entre 85 et 90 kPa, ou qui est par exemple de l'ordre de 65 kPa, ou de l'ordre de 100 kPa. L'appareil 1 de cuisson d'aliments sous pression comporte avantageusement d'autres organes de fonctionnement (par exemple un moyen de sécurité à l'ouverture 13, une soupape de sécurité à la surpression 8, *etc.*)*.*

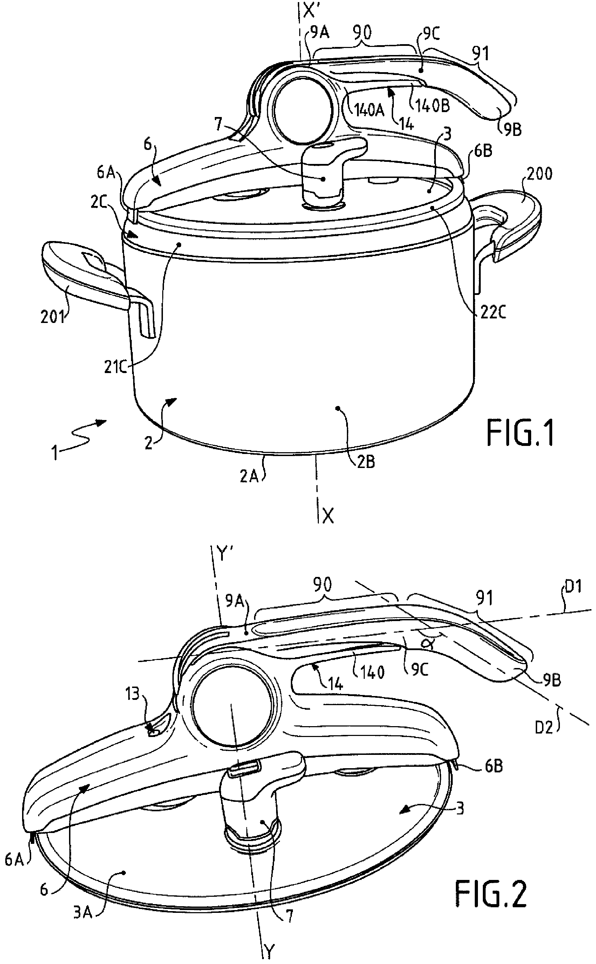

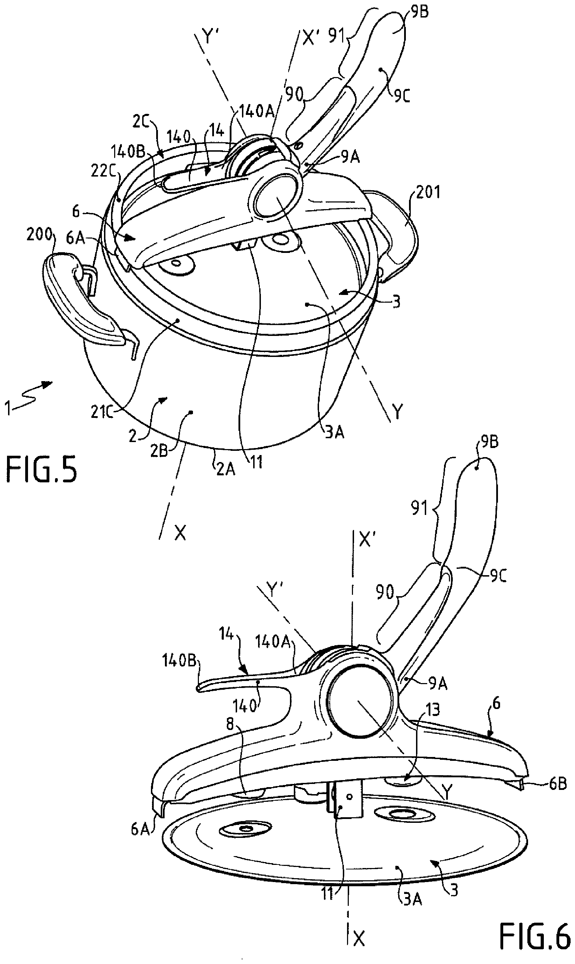

Conformément au mode de réalisation préférentiel illustré aux figures, le couvercle 3 est destiné à être rapporté dans la cuve 2 avec une faculté de mobilité entre au moins :
- d'une part une position de fermeture (figure 1) dans laquelle il forme avec la cuve 2 une enceinte de cuisson capable de monter en pression (c'est à dire suffisamment étanche pour permettre une montée en pression en son sein),
- et d'autre part une position d'ouverture (figure 5) autorisant la communication de l'intérieur de l'enceinte avec l'extérieur, de façon à ce que la pression régnant dans l'enceinte s'équilibre avec la pression atmosphérique.

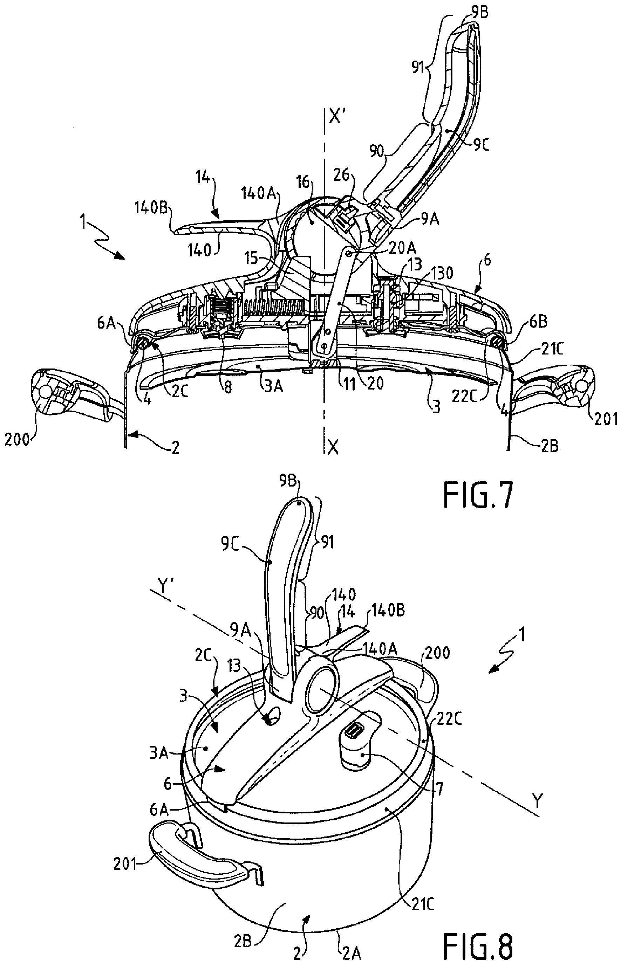

En d'autres termes, conformément au mode de réalisation préférentiel illustré, le couvercle 3 peut être rapporté dans la cuve 2, c'est à dire être inséré à l'intérieur de cette dernière, selon un positionnement prédéterminé, positionnement dans lequel il conserve une possibilité de se déplacer de façon contrôlée entre ses positions de fermeture et d'ouverture, en passant par une pluralité de positions intermédiaire dont l'une est représentée à la figure 8. Dans le mode de réalisation illustré aux figures, le couvercle 3, lorsqu'il occupe sa position de fermeture, vient en contact sensiblement étanche, par la périphérie de sa face supérieure 3A, contre la face interne du rebord rentrant 2C, au contact du joint d'étanchéité 4. Au contraire, lorsque le couvercle 3 se trouve en position d'ouverture, il se trouve à distance du rebord rentrant 2C, ménageant ainsi un espace libre de mise en communication de l'intérieur de la cuve 2 avec l'extérieur qui empêche toute montée en pression significative de l'enceinte. Le passage de la position d'ouverture à la position de fermeture (et vice versa) s'effectue préférentiellement par un mouvement de translation verticale du couvercle 3 de bas en haut (respectivement de haut en bas). Conformément à la variante de réalisation illustré aux figures, le couvercle 3 est avantageusement un couvercle déformable susceptible d'évoluer par déformation entre une configuration géométrique de repos (correspondant à sa position d'ouverture) permettant l'introduction du couvercle 3 dans la cuve 2 sous la face interne du rebord rentrant 2C et une configuration géométrique déformée (correspondant à sa position de fermeture) permettant au couvercle 3 de venir en contact sensiblement étanche contre la face interne du rebord rentrant 2C, cette dernière étant préférentiellement habillée par le joint d'étanchéité 4. Afin de permettre à l'utilisateur d'ouvrir et fermer à volonté l'enceinte de cuisson, le couvercle 3 est préférentiellement dans ce cas un couvercle déformable de façon réversible. Cela signifie que le couvercle 3 est réalisé dans un matériau élastique et est sollicité en déformation à l'intérieur du domaine élastique dudit matériau. De façon préférentielle, le couvercle 3 est un couvercle flexible, c'est-à-dire qu'il est conçu pour changer de forme sous l'effet d'une sollicitation mécanique en flexion. Par exemple, tel que cela est bien connu en tant que tel dans l'art antérieur, le couvercle 3 est constitué d'un flan métallique discoïde qui a subi un roulage de telle sorte qu'il affecte au repos (figure 6), en l'absence de sollicitation mécanique extérieure de déformation, une forme de selle, c'est à dire une forme courbe sensiblement en U (non représentée aux figures). En d'autres termes, le couvercle 3 présente avantageusement au repos (en l'absence de sollicitation de déformation) une forme de disque cintré, qui correspond en projection sur un plan horizontal à une ellipse. Grâce à cette forme gauche, ledit couvercle 3 peut être inséré à l'intérieur de la cuve 2 à travers l'orifice délimité par le rebord rentrant 2C, alors que le diamètre du flan discoïde (avant cintrage) à partir duquel est constitué le couvercle 3 est supérieur à celui de l'ouverture de cuve délimitée par le rebord rentrant 2C. Dans ce qui suit, on s'attachera exclusivement, pour des raisons de simplicité et de concision de description, à décrire un autocuiseur à couvercle flexible, c'est-à-dire un autocuiseur à couvercle rentrant pourvu d'un couvercle 3 élastiquement déformable, dont la forme peut être modifiée de manière réversible par application d'une sollicitation mécanique commandée par l'utilisateur. L'invention n'est toutefois pas limitée à un type particulier d'autocuiseur à couvercle rentrant, et son enseignement s'applique également pleinement à d'autres types d'autocuiseurs à couvercle rentrant, et notamment aux autocuiseurs à trou d'homme.

L'appareil 1 comprend également un levier 9 de commande manuelle de l'ouverture/fermeture de l'appareil 1, ledit levier 9 étant monté sur le couvercle 3 à pivotement, selon un axe horizontal de pivotement Y-Y', entre des positions relevée (figures 5 à 7) et abaissées (figures 1 à 4) correspondant respectivement à l'ouverture et la fermeture de l'appareil 1, et par exemple, dans le mode de réalisation illustré aux figures, aux positions d'ouverture et de fermeture du couvercle 3 relativement à la cuve 2. Ainsi, dans le mode préférentiel illustré aux figures, le levier 9 est conçu pour commander le déplacement du couvercle 3 entre ses positions d'ouverture et de fermeture, de façon que les positions relevée et abaissée du levier 9 (qui sont de préférence des positions de butée) correspondent respectivement aux positions d'ouverture et de fermeture du couvercle 3. Le levier 9 est ainsi conçu pour être actionné manuellement, et se présente à cet effet avantageusement sous la forme d'un manche rotatif capable de pivoter autour de l'axe horizontal de pivotement Y-Y' (lequel s'étend avantageusement dans un plan perpendiculaire à l'axe vertical central X-X') entre la position abaissée, dans laquelle le levier 9 est rabattu au-dessus du couvercle 3, et une position relevée, dans laquelle le levier 9 s'élève au droit du couvercle, selon une direction générale d'extension longitudinale qui est par exemple légèrement oblique (cf. figures 5 à 7) par rapport à la verticale. De préférence, la position abaissée est la seule position correspondant à la fermeture de l'appareil 1, de sorte que dès que le levier 9 quitte sa position abaissée l'appareil 1 passe d'un état fermé à un état ouvert. Dans ce cas, l'état ouvert de l'appareil 1 correspond à une pluralité de positions du levier 9, dont fait partie la position relevée précitée (figures 5 à 7), ainsi que la position intermédiaire de la figure 8. Dans le mode de réalisation illustré aux figures, le levier pivotant 9 est conçu pour exercer un effort sensiblement vertical, selon l'axe vertical central X-X', ledit effort étant préférentiellement appliqué au centre du couvercle 3 et permettant de faire passer le couvercle 3 :
- de sa position d'ouverture à sa position de fermeture par traction verticale du bas vers le haut,
- et inversement, de sa position de fermeture à sa position d'ouverture par relâchement de l'effort de traction exercé, le couvercle 3 retournant en position d'ouverture sous l'effet de son propre poids et/ou de l'action de rappel d'un ressort et/ou par retour élastique (couvercle déformable en flexion).

Dans le mode de réalisation spécifique à couvercle déformable illustré aux figures, le passage de l'une à l'autre desdites configuration géométrique de repos et configuration géométrique déformée est commandé par le levier 9. Ce dernier est ainsi préférentiellement conçu pour commander non seulement le déplacement du couvercle 3, mais également la déformation en flexion du couvercle 3, ces deux fonctions (commande du déplacement et commande de la déformation) intervenant de préférence successivement. Par exemple, sous l'effet de l'effort de traction verticale exercé par le levier 9 au niveau du centre du couvercle 3, ce dernier va tout d'abord se déplacer globalement selon un trajet vertical parallèle à l'axe X-X' jusqu'à venir en butée, vers sa périphérie, contre le rebord rentrant 2C, lequel est habillé sur sa face interne par le joint annulaire d'étanchéité 4. L'effort de traction du bas vers le haut exercé par le levier 9 est alors poursuivi tandis que le couvercle 3 est en appui contre le rebord rentrant 2C (par l'intermédiaire du joint d'étanchéité 4 interposé entre la face supérieure du couvercle 3 et la face inférieure du rebord rentrant 2C), ce qui occasionne alors une déformation élastique en flexion du couvercle 3. Cette déformation conduit le couvercle 3 à adopter une forme de disque sensiblement plat (et non plus cintré), forme lui permettant d'épouser de façon sensiblement uniforme et continue, sur sensiblement toute sa périphérie, le rebord rentrant 2C. On obtient ainsi une enceinte de cuisson suffisamment étanche pour permettre la cuisson des aliments à une pression significativement supérieure à la pression atmosphérique. Il est cependant tout à fait envisageable que le levier 9 assure non pas une double fonction, comme dans l'exemple illustré aux figures, mais seulement la fonction de déplacement global du couvercle 3, par exemple selon un mode de réalisation correspondant à un autocuiseur à trou d'homme dans lequel un couvercle ovale vient simplement se plaquer de manière étanche contre le rebord rentrant de la cuve 2 sans être ensuite déformé.

Comme illustré aux figures, le levier 9 s'étend longitudinalement entre d'une part une extrémité intérieure 9A par laquelle il est relié (indirectement comme illustré aux figures, ou directement) au couvercle 3 et d'autre part une extrémité libre 9B. Afin de procurer un effet de levier suffisant, notamment dans le cas où le levier 9 est destiné à assurer la déformation du couvercle pour l'amener en configuration de fermeture, le levier 9 présent une longueur suffisante, qui par exemple est au moins égale au rayon du couvercle 3, et de préférence excède ce dernier, auquel cas le levier 9 déborde radialement du couvercle 3 et même de la paroi latérale 2B de la cuve 2.

Avantageusement, l'appareil 1 comprend également une traverse d'accostage 6 qui est destinée à être rapportée sur la cuve 2 de façon à reposer sur et contre cette dernière. Comme illustré aux figures, la traverse d'accostage 6 est conçue pour venir reposer librement, en appui périphérique, contre et sur le rebord rentrant 2C, du côté de la face externe de ce dernier, de façon à être disposé en travers de l'ouverture de la cuve 2, pour venir avantageusement en appui externe en deux régions diamétralement opposées du rebord rentrant 2C. La traverse d'accostage 6 comprend avantageusement une platine allongée, réalisée de préférence en matériau métallique, et s'étendant longitudinalement entre deux extrémités opposées pourvues chacune d'un bord tombant respectif 6A, 6B permettant d'assurer un positionnement correct, autocentré, de la traverse d'accostage 6 sur la cuve 2. Avantageusement, le levier 9 est monté pivotant relativement à ladite traverse d'accostage 6, par exemple selon ledit axe horizontal de pivotement Y-Y', ce dernier étant de préférence sensiblement perpendiculaire à la direction d'extension longitudinale de la traverse d'accostage 6, et s'inscrivant avantageusement dans un plan médian qui est perpendiculaire à la direction d'extension longitudinale de la traverse d'accostage 6 et passe par le milieu de cette dernière. Dans ce mode de réalisation préférentiel, le couvercle 3 est suspendu à la traverse d'accostage 6 par l'intermédiaire d'un mécanisme d'entraînement commandé par le levier 9. Le levier 9, la traverse d'accostage 6 et ledit mécanisme d'entraînement forment avantageusement un sous-ensemble unitaire, appelé ici « *module d'accostage* », auquel est suspendu à demeure le couvercle 3. Le module d'accostage susvisé et le couvercle 3 forment ensemble également un ensemble unitaire correspondant à l'ensemble de couvercle illustré séparément aux figures 2, 3 et 6. Le couvercle 3 est avantageusement monté mobile relativement au module d'accostage (et donc à la traverse d'accostage 6) entre deux positions extrêmes qui, lorsque le module d'accostage repose de façon fixe et immobile contre le bord de cuve 22C (tel qu'illustré aux figures 1, 4, 5 et 7), correspondent respectivement aux positions d'ouverture et de fermeture du couvercle. Au sens de l'invention, et en relation avec le mode de réalisation préférentiel illustré aux figures, on considère donc que le couvercle 3 est rapporté dans la cuve 2 lorsque la traverse d'accostage 6, reliée au couvercle 3, vient s'immobiliser en appui contre la cuve 2, le couvercle 3 se trouvant alors pré-positionné au sein de la cuve 2, sous le rebord rentrant 2C, avec une possibilité de se déplacer relativement à la traverse d'accostage 6 et à la cuve 2, le couvercle 3 étant suspendu à et sous la traverse d'accostage 6.

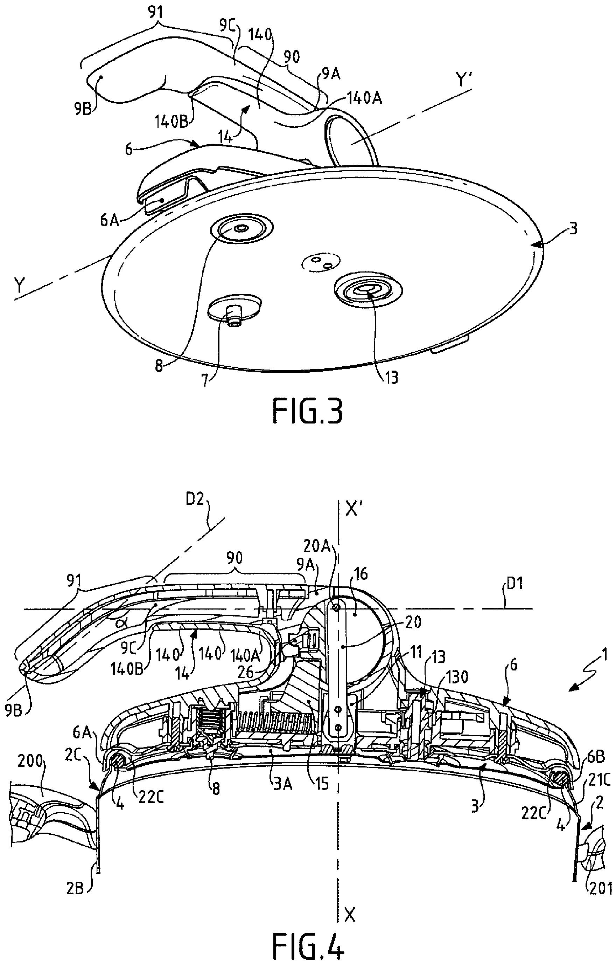

Le mécanisme d'entraînement qui assure la liaison entre la traverse d'accostage 6 et le couvercle 3 comprend de préférence au moins un moyeu 16 monté à rotation selon l'axe horizontal de pivotement Y-Y' relativement à ladite traverse d'accostage 6, le levier 9 étant attaché audit moyeu 16 vers son extrémité intérieure 9A pour commander la rotation dudit moyeu 16. Le levier 9 peut être directement attaché au moyeu 16, voire même venir de matière avec ce dernier. Alternativement, et conformément au mode de réalisation illustré aux figures, le levier 9 peut être relié mécaniquement au moyeu 16 par l'intermédiaire d'un dispositif de liaison débrayable. Dans ce cas de figure préférentiel, l'extrémité intérieure 9A du levier 9 se présente par exemple sous la forme d'une bague montée à rotation autour du moyeu 16, lequel est avantageusement enfilé dans la bague comme illustré. Ledit dispositif de transmission débrayable comprend par exemple une gâche portée par le levier 9 ainsi qu'un pêne 26 porté le moyeu 16 et monté mobile relativement à ce dernier entre :
- une position déployée (figures 4 et 7) de rappel élastique dans laquelle le pêne 26 fait par exemple saillie de la surface périphérique du moyeu 16 et peut ainsi s'insérer dans la gâche pour inhiber la faculté de déplacement du levier 9 relativement au moyeu 16, et assurer ainsi un interengagement desdits levier 9 et moyeu 16 pour accoupler mécaniquement lesdits organe de commande manuel 5 et verrou 15 ; ainsi, les mouvements de rotation imprimés au levier 9 selon l'axe horizontal de pivotement Y-Y' sont directement retransmis au moyeu 16, grâce à la liaison mécanique établie entre le levier 9 et le moyeu 16 par la coopération du pêne 26 et de la gâche associée ;
- et une position rétractée (non visible aux figures) dans laquelle le pêne 26 s'efface par exemple dans le moyeu 16, de sorte que le levier 9 peut se déplacer relativement au moyeu 16 (état débrayé dans lequel les efforts impartis manuellement au levier 9 ne sont pas communiqués au moyeu 16).

Le pêne 26 présente avantageusement une forme inclinée de came de façon que si le moyeu 16 est bloqué en rotation (au moyen d'un verrou 15, comme cela sera expliqué ultérieurement), alors le levier 9 pourra malgré tout pivoter selon l'axe horizontal de pivotement Y-Y', autour du moyeu 16 fixe, en repoussant le pêne 26 dans un logement ménagé à la surface du moyeu 16 et qui forme la gâche, pour supprimer ainsi la liaison mécanique d'entraînement rotatif entre le levier 9 et le moyeu 16.

Le mécanisme d'entraînement comprend avantageusement également une biellette 20 qui relie les moyeu 16 et couvercle 3 pour transformer le déplacement (c'est-à-dire en l'espèce la rotation) du moyeu 16 en déplacement (en l'espèce en translation verticale) du couvercle 3. Par exemple, la biellette 20 s'étend longitudinalement entre deux extrémités, l'une reliée à pivotement en un point 20A excentré du moyeu 16, et l'autre reliée à pivotement à une pièce d'attache 11, par exemple en forme de U. ladite pièce d'attache 11 est solidarisée au couvercle 3, de préférence au centre de ce dernier, par exemple par rivetage, et guidée à coulissement vertical à travers la traverse d'accostage 6, pour contribuer à transformer le mouvement de rotation du levier 9 en mouvement de translation verticale de la pièce d'attache 11 et du couvercle 3 qui lui est attaché. De préférence, les positions relevée et abaissée du levier 9 sont toutes deux des positions de rappel. Par exemple, le rappel en position abaissée est obtenu par un montage qui s'apparente à une genouillère, et qui est basé sur le fait que le point 20A de la biellette 20 se trouve, lorsque le levier 9 est en position abaissée, du même côté que le levier 9 relativement à l'axe vertical central X-X' (figure 4). Ce positionnement spécifique du point 20A fait que la force de retour élastique exercée par le couvercle 3 en position de fermeture a tendance à rappeler le levier 9 en position abaissée. De la même manière, le point 20A est avantageusement du même côté que le levier 9 relativement à l'axe vertical central X-X' (figure 7) lorsque le levier est en position relevée, de sorte que le poids du couvercle 3 exerce une force de rappel du levier 9 en position relevée (laquelle correspond de ce fait à une orientation oblique du levier 9 relativement à la verticale).

L'invention n'est cependant absolument pas limitée à un levier 9 rotatif actionnant un système à biellette. Il est par exemple envisageable qu'en lieu et place d'une biellette soit mise en œuvre une pièce rigide de transmission dont une extrémité est attachée de façon fixe (liaison encastrement) au centre du couvercle 3, tandis que l'autre extrémité est attachée à pivotement au levier 9 (ou à une pièce, tel que le moyeu 16, solidaire de ce dernier).

Avantageusement, comme illustré aux figures, l'appareil de cuisson sous pression 1 comprend également un verrou 15 monté mobile relativement au couvercle 3 entre une position de verrouillage empêchant le couvercle 3 de quitter sa position de fermeture, et de préférence empêchant le couvercle 3 de gagner sa position d'ouverture, et une position de déverrouillage autorisant le couvercle 3 à gagner sa position d'ouverture, de préférence à partir de sa position de fermeture. Avantageusement, le verrou mobile 15 coopère avec le levier 9 pour que, en fonctionnement normal, le verrou 15 inhibe, lorsqu'il se trouve en position de verrouillage, le déplacement du levier 9 afin de bloquer le couvercle 3 en position de fermeture. Dans ce mode de réalisation avantageux, le verrou 15 procure donc, en fonctionnement normal et dans sa position de verrouillage, un effet de blocage positif du levier 9 empêchant toute ouverture intempestive du couvercle 3. Comme illustré, ledit verrou 15 est préférentiellement distinct et indépendant de la pièce allongée 140, et est avantageusement mobile relativement à la pièce allongée 140. Conformément à l'invention, l'appareil 1 comprend également un moyen de sécurité à l'ouverture 13 activable/désactivable automatiquement en réponse au niveau de pression dans l'enceinte. En d'autres termes, le moyen de sécurité à l'ouverture 13 peut passer automatiquement d'un état activé (dans lequel il assure une fonction de sécurité à l'ouverture) à un état désactivé en réponse au niveau de pression dans l'enceinte, selon par exemple que ce dernier atteint ou dépasse un niveau prédéterminé de sécurité (par exemple de l'ordre de 4 kPa au-dessus de la pression atmosphérique). Avantageusement, le moyen de sécurité à l'ouverture 13 interdit, lorsqu'il est activé, au verrou 15 de gagner sa position de déverrouillage, en particulier à partir de sa position de verrouillage, et de préférence interdit au verrou 15 de se déplacer hors de sa position de verrouillage en direction de sa position de déverrouillage. En revanche, le moyen de sécurité 13 autorise, lorsqu'il est désactivé, le verrou 15 à quitter sa position de verrouillage, en particulier pour rejoindre sa position de déverrouillage. Avantageusement, le moyen de sécurité à l'ouverture 13 comprend un doigt de sécurité 130 sensible à la pression régnant à l'intérieur de l'enceinte, ledit doigt 130 étant distinct du verrou 15, et de préférence mobile relativement à ce dernier. Le doigt de sécurité 130 est mobile, notamment relativement au couvercle 3, de préférence selon un mouvement de translation verticale parallèle à l'axe vertical X-X', entre d'une part une position basse (correspondant à l'état désactivé) dans laquelle il est rappelé lorsque le niveau de pression dans l'enceinte est inférieur audit niveau prédéterminé de sécurité compatible avec la sécurité de l'utilisateur, et d'autre part une position haute (correspondant à l'état activé) qu'il occupe lorsque le niveau de pression dans l'enceinte atteint ou dépasse ledit niveau prédéterminé. Ainsi, lorsque l'appareil 1 se trouve dans une configuration déverrouillée, avec son couvercle 3 en position de fermeture et son verrou 15 en position de verrouillage, le moyen de sécurité à l'ouverture 13 vient bloquer le verrou 15 dans sa position de verrouillage dès que la pression interne atteint ou excède le niveau de sécurité prédéterminé, empêchant ainsi le couvercle 3 de quitter sa position de fermeture, puisqu'il est lui-même bloqué dans cette position par le verrou 15. De préférence, le verrou 15 est monté sensiblement à translation horizontale relativement au couvercle 3, et de préférence relativement à la traverse d'accostage 6, entre ses positions de verrouillage et de déverrouillage, avantageusement selon une direction qui est perpendiculaire à la fois à l'axe vertical X-X' et à l'axe de pivotement Y-Y' du levier 9. De préférence, le verrou 15 est solidaire d'un logement (qui est avantageusement embarqué sur le verrou 15) formé par exemple par une lumière qui, lorsque le verrou 15 occupe sa position de verrouillage, se trouve au droit du doigt de sécurité 130, en alignement avec ce dernier, afin de permettre à une conformation de verrouillage porté par le doigt 130, de pénétrer dans le logement pour réaliser ainsi un interverrouillage des doigt de sécurité 130 et verrou 15.

Avantageusement, le levier 9 est lié au verrou 15 par un dispositif de transmission conçu pour entraîner le verrou 15 hors de sa position de verrouillage en réponse au déplacement du levier 9 de sa première vers sa deuxième position alors que le moyen de sécurité à l'ouverture 13 est désactivé. Cela signifie que le déplacement du levier 9 de sa position abaissée vers sa position relevée commande, par l'intermédiaire dudit dispositif de transmission, le déplacement du verrou 15 hors de sa position de verrouillage, pour permettre ainsi au levier 9 de gagner sa deuxième position. Le dispositif de transmission est de préférence conçu pour entraîner automatiquement, sans intervention aucune de l'utilisateur, le verrou 15 hors de sa position de verrouillage en réponse uniquement au déplacement du levier 9 de sa position abaissée à sa position relevée. Bien entendu, l'invention n'est pas limitée à un dispositif de transmission spécifique, et tout dispositif de transformation de mouvement approprié peut être mis en œuvre pour former le dispositif de transmission reliant le levier 9 au verrou 15. Dans les modes de réalisation illustrés aux figures, le dispositif de transmission est avantageusement conçu pour transformer le mouvement de rotation du levier 9 selon l'axe horizontal Y-Y' en mouvement de translation horizontale du verrou 15. Par exemple, le dispositif de transmission peut mettre en œuvre un système à came (comme illustré aux figures), ou à biellette, engrenage, crémaillère... ou tout autre dispositif mécanique de transformation de mouvement approprié.

De façon préférentielle et comme exposé ci-avant en relation avec la description du pêne 26, le dispositif de transmission assurant la liaison mécanique fonctionnelle entre le levier 9 et le verrou 15 est débrayable, pour autoriser le déplacement de l'organe de commande manuel 5 de sa position abaissée vers sa position relevée lorsque le verrou 15 est en position de verrouillage et que le moyen de sécurité à l'ouverture 13 est activé. Le recours à un dispositif de transmission débrayable évite avantageusement de soumettre les pièces de sécurité et de commande, comme par exemple le moyen de sécurité à l'ouverture 13, les pièces formant le dispositif de transmission, le verrou 15 et le levier 9 lui-même, à des efforts potentiellement importants qui pourraient les détériorer. Le recours à un dispositif de transmission débrayable n'est toutefois pas obligatoire, et l'invention peut tout à fait mettre en œuvre, même si cela est bien entendu moins avantageux, un dispositif de transmission qui n'est pas débrayable.

L'appareil de cuisson d'aliments sous pression 1 conforme à l'invention comprend par ailleurs une prise manuelle 14 de transport du couvercle 3, montée sur ce dernier. La prise manuelle 14 en question constitue donc un organe de préhension dont la forme et la résistance mécanique sont adaptées pour permettre la manipulation du couvercle 3 et/ou de l'ensemble de l'appareil 1 formé par l'association de la cuve 2 et du couvercle 3. Le levier 9 est mobile relativement à la prise manuelle 14 de transport, laquelle est de préférence attaché de façon fixe à la traverse d'accostage 6, et de façon encore plus préférentielle, comme illustré aux figures, fait partie intégrante de ladite traverse d'accostage 6, ou à tout le moins du module d'accostage décrit dans ce qui précède. La prise manuelle 14 est donc, conformément au mode de réalisation illustré aux figures, avantageusement fixe en position relativement à la traverse d'accostage 6, c'est-à-dire que la prise manuelle 14 ne présente pas de faculté de mobilité relativement à la traverse d'accostage 6. La prise manuelle 14 de transport du couvercle 3 est donc avantageusement embarquée dans le module d'accostage et est de préférence montée fixe relativement à la traverse d'accostage 6 de façon que le levier 9 soit mobile relativement à la fois à la traverse d'accostage 6 et à la prise manuelle 14. Cette dernière se présente en l'espèce sous la forme d'une pièce 140 allongée, c'est-à-dire une pièce présentant forme élancée, avec une longueur bien supérieure (par exemple au moins deux ou trois fois supérieure) aux autres dimensions de ladite pièce. Plus précisément, la prise manuelle 14 se présente sous la forme d'une pièce allongée 140 contre et sur laquelle vient se rabattre le levier 9 en position abaissée (figures 1, 2 et 4). La pièce allongée 140 en question est donc disposée à l'une des extrémités de la course angulaire du levier 9, de façon que ce dernier vienne se superposer à la pièce allongée 140, de préférence sur, et au contact de, cette dernière, lorsqu'il se trouve dans sa position abaissée. En d'autres termes, le levier 9, en position abaissé, repose sur la pièce allongée 140. La pièce allongée 140 présente avantageusement une surface supérieure contre et sur laquelle le levier 9 est destiné à venir reposer en position abaissée, ainsi qu'une surface inférieure opposée libre, formant une surface de préhension contre laquelle un utilisateur peut appliquer un ou plusieurs de ses doigts pour soulever le couvercle 3. Ladite surface inférieure est ainsi avantageusement destinée à reposer sur et contre des doigts de l'utilisateur pour permettre à ce dernier d'exercer sur la pièce allongée 140 un effort du bas vers le haut. La pièce allongée 140 formant la prise manuelle 14 est par exemple issue d'une protubérance centrale de la traverse d'accostage 6, protubérance au sein de laquelle est avantageusement montée à rotation le moyeu 16 auquel est attaché le levier 9 par son extrémité intérieure 9A.

Conformément à l'invention, la pièce allongée 140 formant la prise manuelle 14 s'étend sous le levier 9 en position abaissée le long seulement d'une première portion 90 de ce dernier, par exemple une première portion 90 représentant au plus 75% de la longueur du levier 9, ladite première portion 90 étant prolongée par une deuxième portion 91 du levier 9, deuxième portion 91 qui s'étend librement jusqu'à ladite extrémité libre 9B et n'est pas superposée à ladite pièce allongée 140, pour permettre ainsi la préhension manuelle de la seule deuxième portion 91 du levier 9 en position abaissée. En d'autres termes, seule une partie (première portion 90) du levier 9, qui s'étend entre l'extrémité intérieure 9A et une zone intermédiaire 9C située à distance à la fois de l'extrémité intérieure 9A et de l'extrémité libre 9B, vient se superposer à la pièce allongée 140 formant la prise manuelle 14, de sorte qu'une portion terminale du levier 9, qui correspond à la deuxième portion 91, ne vient ni au contact, ni même au droit, de la pièce allongée 140 en question. Cela permet de ménager, sous la deuxième portion 91, un espace libre suffisant pour permettre à un utilisateur d'agripper, alors que le levier 9 est en position abaissée, la deuxième portion 91, en plaçant un ou plusieurs doigts sous et contre ladite deuxième portion 91. En d'autres termes, comme illustré aux figures, la deuxième portion 91 présente avantageusement une surface inférieure libre, qui s'étend en position abaissée dans le prolongement de la surface inférieure de la pièce allongée 140, pour former une surface de préhension contre laquelle un utilisateur peut appliquer par en dessous un ou plusieurs de ses doigts disposés transversalement au levier 9 pour agripper et soulever ce dernier. Ladite surface inférieure libre de la deuxième portion 91 est ainsi avantageusement destinée à reposer sur et contre un ou plusieurs doigts de l'utilisateur, pour permettre à ce dernier d'exercer sur la pièce allongée 140 un effort du bas vers le haut. Grâce à cette caractéristique, l'utilisateur peut de façon extrêmement simple et intuitive procéder indifféremment à l'une ou l'autre des actions suivantes :
- s'il souhaite transporter le couvercle 3 (avec éventuellement la cuve 2 qui lui est associée ainsi que les aliments et liquides éventuellement contenus dans cette dernière), il glissera alors ses doigts sous la prise manuelle 14 et pourra ainsi soulever le couvercle 3, la paume de sa main venant avantageusement au contact de la première portion 90 rabattue contre la prise manuelle 14, de sorte que l'ensemble prise manuelle 14 / première portion 90 forme un organe de préhension que l'utilisateur peut empoigner.
- s'il souhaite au contraire simplement procéder à l'ouverture de l'appareil 1, il saisira alors uniquement la deuxième portion 91 du levier 9 et l'entraînera en rotation en direction de la position relevée pour procéder à l'ouverture de l'appareil 1.

Ainsi, la longueur du levier 9 est supérieure à celle de la pièce allongée 140 formant la prise manuelle 14, de façon que le levier 9 déborde radialement relativement à la pièce allongée 140 lorsque le levier 9 est en position abaissée. Comme illustré aux figures, la première portion 90 du levier 9 présente avantageusement une longueur sensiblement équivalente à celle de la pièce allongée 140 formant la prise manuelle 14, longueur qui est par exemple inférieure au rayon du couvercle 3, de préférence comprise entre 30 et 80 % dudit rayon. La longueur de la deuxième portion 91 représente quant à elle au moins 50 %, et de préférence au moins 80 % de la longueur de la première portion 90, lesdites première et deuxième portions 90, 91 présentant de préférence des longueurs sensiblement comparables, afin de faciliter l'utilisation de l'appareil 1. Avantageusement, la pièce allongée 140 présente une longueur suffisante pour permettre la mise en appui contre et sous ladite pièce allongée 140 d'au moins un doigt d'un utilisateur, et de préférence d'au moins deux doigts, afin d'exercer un effort de soulèvement sur la pièce allongée. L'utilisateur peut ainsi venir glisser transversalement un ou deux doigts sous la pièce allongée 140, ce qui suffit ensuite pour exercer un effort de soulèvement sur la pièce allongée 140 et l'ensemble de couvercle dont elle fait partie. De préférence, la deuxième portion 91 du levier 9 présente elle aussi une longueur suffisante pour permettre la mise en appui contre et sous ladite deuxième portion 91 d'au moins un doigt, et de préférence de deux doigts, d'un utilisateur, lesdits doigts étant de préférence disposés transversalement au levier 9, afin d'exercer un effort de soulèvement sur ladite deuxième portion 91, laquelle forme ainsi une portion de préhension agrippable avec une surface de prise suffisante pour pouvoir être saisie et enserrée manuellement. Grâce à cette caractéristique, l'utilisateur peut aisément exercer un effort de mise en rotation sur la portion terminale du levier 9, et exercer ainsi un effort suffisant pour ouvrir l'appareil 1.

Avantageusement, les pièce allongée 140 et première portion 90 présentent des conformations respectives complémentaires destinées à s'emboîter lorsque le levier 9 est en position abaissée. Grâce à cette caractéristique avantageuse, la pièce allongée 140 et la première portion 90 forment localement et conjointement une portion de manche monobloc dont la partie inférieure est formée par la pièce allongée 140 et dont la partie supérieure est formée par la première portion 90. De préférence, et comme illustré aux figures, la pièce allongée 140 affecte une forme de gouttière destinée à recevoir la première portion 90 lorsque le levier 9 est en position abaissée. Une telle forme de gouttière, qui s'apparente également à une forme de bec-verseur avec un profil en U plus ou moins marqué, présente le double intérêt de non seulement permettre l'emboîtement précité, mais également de présenter un moment quadratique optimisé, permettant de conférer à la pièce allongée 140 à la fois un caractère léger et une résistance à la flexion élevée. Ceci permet de réaliser la prise manuelle 14 en matière plastique, sans risque significatif de déformation ou de casse, tout en limitant le surpoids occasionné par la présence de la prise manuelle 14.

Avantageusement, la pièce allongée 140 s'étend longitudinalement entre une extrémité interne 140A par laquelle elle est reliée au couvercle 3 et une extrémité libre 140B. De préférence, la pièce allongée 140 s'étend ainsi sensiblement radialement, de préférence parallèlement à un plan horizontal perpendiculaire à l'axe vertical central X-X', entre ses extrémité interne 140A et extrémité libre 140B. Le levier 9 pivote avantageusement relativement à la prise manuelle 14 de transport selon une trajectoire s'inscrivant dans un plan moyen au sein duquel s'inscrit également l'axe vertical central X-X', ce dernier passant par le centre du couvercle 3 et croisant ledit axe horizontal de pivotement Y-Y'. L'extrémité interne 140A est avantageusement reliée au couvercle 3 par l'intermédiaire de la traverse d'accostage 6 à laquelle ladite extrémité interne 140A est reliée, de préférence au voisinage du milieu de ladite traverse d'accostage 6. A l'inverse, l'extrémité opposée 140B de la pièce allongée 140 est totalement libre, c'est-à-dire qu'elle n'est pas reliée directement ou indirectement au couvercle 3 ni à la traverse d'accostage 6. En particulier, l'extrémité libre 140B ne se prolonge pas par une pièce reliée au couvercle 3 ou à la traverse 6, de sorte que la pièce allongée 140 ne forme de ce fait pas une boucle fermée, ce qui facilite l'utilisation de l'appareil. Lorsque le levier 9 se trouve en position abaissée et qu'il est rabattu contre la pièce allongée 140, l'extrémité interne 140A de cette dernière et l'extrémité intérieure 9A du levier 9 sont sensiblement superposée, lesdites extrémité intérieure 9A et extrémité interne 140A étant avantageusement situées au voisinage de l'axe central X-X'. Au contraire, les extrémités libres 9B, 140B respectives du levier 9 et de la pièce allongée 140 sont mutuellement espacées et situées à distance de l'axe vertical central X-X'.

Grâce au fait que la pièce allongée 140 est attachée au reste de l'ensemble de couvercle uniquement par son extrémité interne 140A (l'extrémité opposée 140B étant libre), les doigts dont se sert l'utilisateur pour soulever le couvercle 3 devront être impérativement placés au plus près de l'axe vertical central X-X', et donc au plus près de l'extrémité interne 140A, afin de conserver l'horizontalité du couvercle 3, et éviter un basculement du couvercle 3 ou de l'appareil 1 qui ne manquerait pas de se produire si l'utilisateur attrapait la deuxième portion 91 plutôt que la première portion 90. La conception retenue dans le cadre de l'invention, grâce à la mise en œuvre d'une extrémité libre 140B qui n'est pas reliée au couvercle 3 et ne permet donc pas de reprendre tout ou partie de l'effort de soulèvement, incite ainsi par elle-même l'utilisateur qui souhaite soulever l'appareil 1 par le levier 9 à positionner ses doigts au bon endroit, c'est-à-dire sous et contre la pièce allongée 140. Si l'utilisateur s'avisait au contraire de tenter de manipuler l'appareil 1 par la partie terminale libre (deuxième portion 91) du levier 9, l'appareil 1 s'inclinerait nécessairement, avec le risque de voir son contenu venir au contact du couvercle 3, avec tous les inconvénients qui en découleraient (salissures du couvercle et gouttes pouvant tomber de ce dernier à l'ouverture). L'utilisateur intègre plus ou moins consciemment ces inconvénients. Il a dès lors le réflexe naturel, à la simple vue du manche formé par l'emboîtement de la pièce allongée 140 et du levier 9 en position abaissée, de venir attraper ledit manche au plus près de l'aplomb du centre de gravité du couvercle 3, donc au niveau de la pièce allongée 140 et de la première portion 90, pour maintenir autant que possible l'horizontalité de l'appareil 1 pendant son soulèvement et transport. À l'inverse, l'utilisateur aura naturellement tendance, lorsqu'il souhaite ouvrir le couvercle 3, à positionner ses doigts au plus près de l'extrémité libre 9B du levier 9, pour bénéficier d'un bras de levier maximal permettant de minimiser l'effort manuel d'ouverture.

Afin d'améliorer encore l'ergonomie et favoriser l'utilisation intuitive de la prise manuelle 14 et de la première portion 90 pour soulever l'appareil 1, et de la deuxième portion 91 pour l'ouvrir, la deuxième portion 91 est avantageusement inclinée vers le bas relativement à la première portion 90 et la pièce allongée 140. Par exemple, la première portion 90, qui est avantageusement sensiblement rectiligne, s'étend selon une première direction moyenne D1, laquelle est de préférence sensiblement horizontale (perpendiculaire à l'axe vertical central X-X') lorsque le levier 9 occupe sa position abaissée, tandis que la deuxième portion 91, qui est par exemple sensiblement courbe comme illustré (mais peut être alternativement rectiligne) s'étend selon une direction moyenne D2 qui est sécante avec la direction moyenne D1 d'extension longitudinale de la première portion 90 et forme avec cette dernière un angle α par exemple supérieur à 90° mais inférieur à 180°. Le levier 9 présente ainsi une zone d'inflexion 9C qui correspond au passage de la première portion 90 à la deuxième portion 91, ladite zone d'inflexion 9C se retrouvant sensiblement au droit ou au voisinage de l'extrémité libre 140B de la pièce allongée 140 lorsque le levier 9 est en position abaissée. L'utilisateur comprend ainsi immédiatement que s'il saisit l'appareil 1 par la deuxième portion 91 du levier 9, il lui sera difficile, sinon impossible, en raison de l'inclinaison vers le bas de la deuxième portion 91, de maintenir l'appareil 1 à l'horizontale. L'utilisateur sera dès lors intuitivement incité à plutôt utiliser la portion de manche formée par l'assemblage de la pièce allongée 140 et de la première portion 90 pour soulever l'appareil 1.

## Revendications

1. - Appareil de cuisson d'aliments sous pression (1) comprenant au moins un couvercle (3) et un levier (9) de commande manuelle de l'ouverture/fermeture de l'appareil (1), ledit levier (9) étant monté sur le couvercle (3) à pivotement selon un axe horizontal de pivotement (Y-Y'), entre des positions relevée et abaissée correspondant respectivement à l'ouverture et à la fermeture de l'appareil (1), ledit levier (9) s'étendant longitudinalement entre d'une part une extrémité intérieure (9A) par laquelle il est relié au couvercle et d'autre part une extrémité libre (9B), ledit appareil étant **caractérisé en ce qu'**il comprend une prise manuelle (14) de transport du couvercle (3) montée sur ce dernier, ledit levier (9) étant mobile relativement à ladite prise manuelle (14) de transport, laquelle se présente sous la forme d'une pièce allongée (140), contre et sur laquelle vient se rabattre ledit levier (9) en position abaissée, ladite pièce allongée (140) s'étendant sous le levier (9) en position abaissée le long seulement d'une première portion (90) de ce dernier, ladite première portion (90) étant prolongée par une deuxième portion (91) du levier (9) qui s'étend librement jusqu'à ladite extrémité libre (9B) et n'est pas superposée à ladite pièce allongée (140), pour permettre ainsi la préhension manuelle de la seule deuxième portion (91) du levier (9) en position abaissée.

2. - Appareil (1) selon la revendication 1 **caractérisé en ce que** la longueur de la deuxième portion représente au moins 50%, et de préférence au moins 80% de la longueur de la première portion.

3. - Appareil (1) selon la revendication 1 ou 2 **caractérisé en ce que** la deuxième portion (91) est inclinée vers le bas relativement à la première portion (90).

4. - Appareil (1) selon l'une des revendications 1 à 3 **caractérisé en ce que** la première portion (90) est sensiblement rectiligne tandis que la deuxième portion (91) est sensiblement courbe.

5. - Appareil (1) selon l'une des revendications 1 à 4 **caractérisé en ce que** lesdites pièce allongée (140) et première portion (90) présentent des conformations respectives complémentaires destinées à s'emboîter lorsque le levier (9) est en position abaissée.

6. - Appareil (1) selon l'une des revendications 1 à 5 **caractérisé en ce que** ladite pièce allongée (140) affecte une forme de gouttière destinée à recevoir ladite première portion (90) lorsque le levier (9) est en position abaissée.

7. - Appareil (1) selon l'une des revendications 1 à 6 **caractérisé en ce que** ledit levier (9) pivote relativement à ladite prise manuelle (14) de transport selon une trajectoire s'inscrivant dans un plan moyen au sein duquel s'inscrit également un axe vertical central (X-X'), ledit axe vertical central passant par le centre du couvercle et croisant ledit axe de pivotement horizontal (Y-Y').

8. - Appareil (1) selon l'une des revendications 1 à 7 **caractérisé en ce que** ladite pièce allongée (140) s'étend longitudinalement entre une extrémité interne (140A) par laquelle elle est reliée au couvercle (3) et une extrémité libre (140B).

9. - Appareil (1) selon l'une des revendications 1 à 8 **caractérisé en ce que** ladite pièce allongée (140) présente une longueur suffisante pour permettre la mise en appui contre et sous ladite pièce allongée (140) d'au moins un doigt d'un utilisateur afin d'exercer un effort de soulèvement sur ladite pièce allongée (140).

10. -Appareil (1) selon l'une des revendications 1 à 9 **caractérisé en ce que** ladite deuxième portion (91) du levier (9) présente une longueur suffisante pour permettre la mise en appui contre et sous ladite deuxième portion d'au moins un doigt d'un utilisateur afin d'exercer un effort de soulèvement sur ladite deuxième portion (91).

11. -Appareil (1) selon l'une des revendications 1 à 10 **caractérisé en ce qu'**il constitue un appareil de cuisson sous pression à couvercle (3) rentrant, et **en ce qu'**il comprend une cuve (2) dans laquelle ledit couvercle (3) est destiné à être rapporté avec une faculté de mobilité entre au moins d'une part une position de fermeture dans laquelle il forme avec la cuve (2) une enceinte de cuisson capable de monter en pression, et d'autre part une position d'ouverture autorisant la communication de l'intérieur de l'enceinte avec l'extérieur, ledit levier (9) étant conçu pour commander le déplacement du couvercle (3) entre ses positions d'ouverture et de fermeture, de façon que les positions relevée et abaissée du levier (9) correspondent respectivement aux positions d'ouverture et de fermeture du couvercle (3).

12. -Appareil (1) selon la revendication 11 **caractérisé en ce qu'**il comprend une traverse d'accostage (6) qui est destinée à être rapportée sur la cuve (2) de façon à reposer sur et contre cette dernière, ledit levier (9) étant monté pivotant relativement à ladite traverse d'accostage selon ledit axe horizontal de pivotement (Y-Y'), ledit couvercle (3) étant suspendu à ladite traverse d'accostage (6) par l'intermédiaire d'un mécanisme d'entraînement commandé par le levier (9).

13. -Appareil (1) selon la revendication 12 **caractérisé en ce que** ladite prise manuelle (14) de transport est fixe en position relativement à la traverse d'accostage (6), et de préférence fait partie intégrante de ladite traverse d'accostage (6).

14. -Appareil (1) selon l'une des revendications 11 à 13 **caractérisé en ce qu'**il comprend :
- un verrou (15) monté mobile relativement au couvercle (3) entre une position de verrouillage empêchant le couvercle (3) de quitter sa position de fermeture, et une position de déverrouillage autorisant le couvercle (3) à gagner sa position d'ouverture,
- et un moyen de sécurité à l'ouverture (13) activable/désactivable automatiquement en réponse au niveau de pression dans l'enceinte, ledit moyen de sécurité à l'ouverture (13) interdisant, lorsqu'il est activé, au verrou (15) de gagner sa position de déverrouillage, et autorisant, lorsqu'il est désactivé, le verrou (15) à quitter sa position de verrouillage.

15. -Appareil (1) selon la revendication 14 **caractérisé en ce que** ledit verrou (15) est mobile relativement à la pièce allongée (140).

## Patentansprüche

1. Druckkochgerät für Nahrungsmitteln (1) mit mindestens einem Deckel (3) und einem Hebel (9) zur manuellen Steuerung des Öffnens/Schließens des Geräts (1), wobei der Hebel (9) am Deckel (3) um eine horizontale Schwenkachse (Y-Y') zwischen einer angehobenen und einer abgesenkten Position, die jeweils dem Öffnen und dem Schließen des Geräts (1) entsprechen, schwenkbar angebracht ist, wobei sich der Hebel (9) in Längsrichtung zwischen einerseits einem inneren Ende (9A), durch das er mit dem Deckel verbunden ist, und andererseits einem freien Ende (9B) erstreckt, wobei das Gerät **dadurch gekennzeichnet ist, dass** es einen Transporthandgriff (14) für den Deckel (3) umfasst, der an diesem montiert ist, der Hebel (9) relativ zu dem Transporthandgriff (14) beweglich ist, der in Form eines länglichen Teils (140) vorliegt, gegen das und auf das der Hebel (9) in der abgesenkten Position umklappt, wobei sich das längliche Teil (140) unter dem Hebel (9) in der abgesenkten Position nur entlang eines ersten Abschnitts (90) des letzteren erstreckt, wobei der erste Abschnitt (90) durch einen zweiten Abschnitt (91) des Hebels (9) verlängert ist, der sich frei bis zu dem freien Ende (9B) erstreckt und nicht über dem länglichen Stück (140) liegt, um dadurch das manuelle Greifen nur des zweiten Abschnitts (91) des Hebels (9) in der abgesenkten Position zu ermöglichen.

2. Gerät (1) nach Anspruch 1, **dadurch gekennzeichnet, dass** die Länge des zweiten Abschnitts mindestens 50%, vorzugsweise mindestens 80%, der Länge des ersten Abschnitts beträgt.

3. Gerät (1) nach Anspruch 1 oder 2, **dadurch gekennzeichnet, dass** der zweite Abschnitt (91) relativ zum ersten Abschnitt (90) nach unten geneigt ist.

4. Gerät (1) nach einem der Ansprüche 1 bis 3, **dadurch gekennzeichnet, dass** der erste Abschnitt (90) im Wesentlichen geradlinig ist, während der zweite Abschnitt (91) im Wesentlichen gekrümmt ist.

5. Gerät (1) nach einem der Ansprüche 1 bis 4, **dadurch gekennzeichnet, dass** das längliche Teil (140) und der erste Abschnitt (90) jeweils komplementäre Formgebungen aufweisen, die dazu bestimmt sind, ineinander zu greifen, wenn sich der Hebel (9) in der abgesenkten Position befindet.

6. Gerät (1) nach einem der Ansprüche 1 bis 5, **dadurch gekennzeichnet, dass** das längliche Teil (140) eine Rinnenform zur Aufnahme des ersten Abschnitts (90) annimmt, wenn sich der Hebel (9) in der abgesenkten Position befindet.

7. Gerät (1) nach einem der Ansprüche 1 bis 6, **dadurch gekennzeichnet, dass** der Hebel (9) relativ zu dem Transporthandgriff (14) entlang einer Bahn schwenkt, die in einer Mittelebene liegt, in der auch eine vertikale Mittelachse (X-X') liegt, wobei die vertikale Mittelachse durch die Mitte des Deckels verläuft und die horizontale Schwenkachse (Y-Y') kreuzt.

8. Gerät (1) nach einem der Ansprüche 1 bis 7, **dadurch gekennzeichnet, dass** das längliche Teil (140) sich in Längsrichtung zwischen einem inneren Ende (140A), über das es mit dem Deckel (3) verbunden ist, und einem freien Ende (140B) erstreckt.

9. Gerät (1) nach einem der Ansprüche 1 bis 8, **dadurch gekennzeichnet, dass** das längliche Teil (140) eine ausreichende Länge aufweist, um zu ermöglichen, dass mindestens ein Finger eines Benutzers an und unter dem länglichen Teil (140) anliegt, um eine Hebekraft auf das längliche Teil (140) auszuüben.

10. Gerät (1) nach einem der Ansprüche 1 bis 9, **dadurch gekennzeichnet, dass** der zweite Abschnitt (91) des Hebels (9) eine ausreichende Länge aufweist, um zu ermöglichen, dass mindestens ein Finger eines Benutzers gegen und unter den zweiten Abschnitt gedrückt wird, um eine Hebekraft auf den zweiten Abschnitt (91) auszuüben.

11. Gerät (1) nach einem der Ansprüche 1 bis 10, **dadurch gekennzeichnet, dass** es ein Druckkochgerät mit eingezogenem Deckel (3) darstellt und dass es einen Behälter (2) umfasst, in dem der Deckel (3) dazu bestimmt ist, mit einer Beweglichkeit zwischen mindestens einerseits einer Schließposition, in der er mit dem Behälter (2) einen Kochraum bildet, der in der Lage ist, unter Druck zu stehen, aufgesetzt zu werden, und andererseits einer Öffnungsstellung, die die Verbindung des Inneren des Kochraums mit der Außenseite zulässt, wobei der Hebel (9) dazu ausgelegt ist, die Bewegung des Deckels (3) zwischen seiner Öffnungs- und seiner Schließstellung zu steuern, so dass die angehobene und die abgesenkte Stellung des Hebels (9) jeweils der Öffnungs- und der Schließstellung des Deckels (3) entsprechen.

12. Gerät (1) nach Anspruch 11, **dadurch gekennzeichnet, dass** sie einen Andockquerträger (6) umfasst, der dazu bestimmt ist, auf den Behälter (2) aufgesetzt zu werden, so dass er auf und an diesem letzteren ruht, wobei der Hebel (9) relativ zum Andockquerträger um die horizontale Schwenkachse (Y-Y') schwenkbar montiert ist, wobei der Deckel (3) am Andockquerträger (6) über einen vom Hebel (9) gesteuerten Antriebsmechanismus aufgehängt ist.

13. Gerät (1) nach Anspruch 12, **dadurch gekennzeichnet, dass** der Transporthandgriff (14) in seiner Position relativ zum Andockquerträger (6) fixiert ist und vorzugsweise einen integralen Bestandteil des Andockquerträgers (6) bildet.

14. Gerät (1) nach einem der Ansprüche 11 bis 13, **dadurch gekennzeichnet, dass** sie umfasst:
- einen Riegel (15), der relativ zum Deckel (3) zwischen einer Verriegelungsposition, die verhindert, dass der Deckel (3) seine Schließposition verlässt, und einer Entriegelungsposition, die es dem Deckel (3) erlaubt, seine Öffnungsposition zu erreichen, beweglich montiert ist,
- und ein Öffnungssicherheitsmittel (13), das als Reaktion auf den Druckpegel in dem Kochraum automatisch aktiviert/deaktiviert werden kann, wobei das Öffnungssicherheitsmittel (13), wenn es aktiviert ist, den Riegel (15) daran hindert, seine Entriegelungsposition zu erreichen, und, wenn es deaktiviert ist, es dem Riegel (15) erlaubt, seine Verriegelungsposition zu verlassen.

15. Gerät (1) nach Anspruch 14, **dadurch gekennzeichnet, dass** der Riegel (15) relativ zu dem länglichen Teil (140) beweglich ist.

## Claims

1. An appliance (1) for cooking food under pressure, the appliance including at least a lid (3) and a manual control lever (9) for opening and closing the appliance (1), said lever (9) being mounted on the lid (3) to pivot about a horizontal pivot axis (Y-Y') between a raised position and a lowered position corresponding respectively to opening and closing the appliance (1), said lever (9) extending longitudinally between firstly an inner end (9A) via which it is connected to the lid and secondly a free end (9B), said appliance being **characterized in that** it includes a manual carrying grip (14) for carrying the lid (3) mounted on the lid (3), said lever (9) being mounted to move relative to said manual carrying grip (14) which is in the form of an elongate part (140) against and on which said lever (9) is folded down in the lowered position, said elongate part (140) extending under the lever (9) in the lowered position along only a first portion (90) of the lever (9), said first portion (90) being extended by a second portion (91) of the lever (9) that extends freely to said free end (9B) and that does not overlie said elongate part (140) so that when the lever (9) is in the lowered position it is possible to take hold manually of its second portion (91) only.

2. An appliance (1) according to claim 1, **characterized in that** the length of the second portion represents at least 50% and preferably at least 80% of the length of the first portion.

3. An appliance (1) according to claim 1 or claim 2, **characterized in that** the second portion (91) slopes downwards relative to the first portion (90).

4. An appliance (1) according to any one of claims 1 to 3, **characterized in that** the first portion (90) is substantially straight, while the second portion (91) is substantially curved.

5. An appliance (1) according to any one of claims 1 to 4, **characterized in that** said elongate part (140) and said first portion (90) present respective complementary shapes for mutual engagement when the lever (9) is in the lowered position.

6. An appliance (1) according to any one of claims 1 to 5, **characterized in that** said elongate part (140) is in the form of a trough that is to receive said first portion (90) when the lever (9) is in the lowered position.

7. An appliance (1) according to any one of claims 1 to 6, **characterized in that** said lever (9) pivots relative to said manual carrying grip (14) along a path that is inscribed in a mean plane within which a central vertical axis (X-X') is also inscribed, said central vertical axis passing through the center of the lid and crossing said horizontal pivot axis (Y-Y').

8. An appliance (1) according to any one of claims 1 to 7, **characterized in that** said elongate part (140) extends longitudinally between an inner end (140A) via which it is connected to the lid (3), and a free end (140B).

9. An appliance (1) according to any one of claims 1 to 8, **characterized in that** said elongate part (140) presents a length that is sufficient to enable at least one user finger to be pressed against and under said elongate part (140) in order to exert a lifting force on said elongate part (140).

10. An appliance (1) according to any one of claims 1 to 9, **characterized in that** said second portion (91) of the lever (9) presents a length that is sufficient to enable at least one user finger to be pressed against and under said second portion in order to exert a lifting force on said second portion (91).

11. An appliance (1) according to any one of claims 1 to 10, **characterized in that** it constitutes an appliance for cooking under pressure having an internally-fitted lid (3), and **in that** it comprises a vessel (2) in which said lid (3) is to be fitted with the ability to move between firstly a closed position in which it co-operates with the vessel (2) to form a cooking enclosure capable of rising in pressure, and secondly an opening position allowing communication between the inside of the enclosure and the outside, said lever (9) being designed to control the movement of the lid (3) between its opening and closed positions so that the raised and lowered positions of the lever (9) correspond respectively to the opening and closed positions of the lid (3).

12. An appliance (1) according to claim 11, **characterized in that** it includes a docking crossbar (6) that is for fitting on the vessel (2) in such a manner as to rest on and against the vessel, said lever (9) being mounted to pivot relative to said docking crossbar about said horizontal pivot axis (Y-Y'), said lid (3) being suspended from said docking crossbar (6) via a drive mechanism controlled by the lever (9).

13. An appliance (1) according to claim 12, **characterized in that** said manual carrying grip (14) is stationary in position relative to the docking crossbar (6), and preferably forms an integral portion of said docking crossbar (6).

14. An appliance (1) according to any one of claims 11 to 13, **characterized in that** it includes:
- a latch (15) mounted to move relative to the lid (3) between a latching position preventing the lid (3) from leaving its closed position, and an unlatching position allowing the lid (3) to reach its opening position; and
- opening safety means (13) that are automatically activatable and deactivatable in response to the level of pressure inside the enclosure, said opening safety means (13), when activated, preventing the latch (15) from reaching its unlatching position, and when deactivated, allowing the latch (15) to leave its latching position.

15. An appliance (1) according to claim 14, **characterized in that** said latch (15) is movable relative to said elongate part (140).
